# FASCICULE DE BREVET EUROPEEN

(11) **EP 3 026 999 B1**
(45) Date de publication et mention de la délivrance du brevet: **25.11.2020**
(21) Numéro de dépôt: 14748251.7
(22) Date de dépôt: 21.07.2014
(51) Int. Cl.: A01C 17/00, A01C 23/00, A01C 21/00, C09K 17/22

(54) **NOUVELLE METHODE DE CONDITIONNEMENT DE SOL PAR APPLICATION DE POLYMERE HYDROSOLUBLE OU HYDROGONFLANT**
NEUARTIGES VERFAHREN ZUR BODENVERBESSERUNG DURCH ANWENDUNG WASSERLÖSLICHER ODER IN WASSER QUELLBARER POLYMERE
NOVEL METHOD OF SOIL CONDITIONING BY APPLICATION OF WATER-SOLUBLE OR WATER-SWELLING POLYMER

(30) Priorité: 02.08.2013 FR 1357705
(43) Date de publication de la demande: 08.06.2016
(73) Titulaire: S.P.C.M. SA, 42160 Andrézieux Bouthéon (FR)
(72) Inventeur: LECOINTE, Charles, F-69390 Vernaison (FR)
(74) Mandataire: Cabinet Laurent & Charras
(86) Numéro de dépôt international: PCT/FR2014/051863
(87) Numéro de publication internationale: WO 2015/015087

(56) Documents cités:
- WO-A1-2011/002521
- FR-A1- 2 370 430
- US-A- 2 888 206
- US-A- 3 395 896
- US-A- 4 208 973
- US-A- 5 824 725
- US-A1- 2006 193 700
- US-A1- 2010 072 295
- US-A1- 2011 309 170

## Description

### DOMAINE TECHNIQUE DE L'INVENTION

La présente invention concerne le domaine du conditionnement de sol par pulvérisation, dispersion ou épandage de polymère à leur surface, en particulier en l'absence d'un système d'irrigation.

Le conditionnement de sol permet de préserver l'intégrité d'un sol, d'en améliorer ou d'en préserver les propriétés, ainsi que de préserver l'environnement et les personnes en limitant les transferts d'éléments par voie hydraulique ou aérienne. Ces bénéfices sont obtenus en protégeant la stabilité structurale des agrégats, en limitant l'érosion et les phénomènes de battance, entrainant ainsi de nombreux bénéfices secondaires.

Par « conditionnement de sol », on désigne le contrôle de l'érosion hydrique, de l'érosion éolienne, de la formation de croûtes de battance, la préservation de la structure des agrégats de sol, le contrôle de l'infiltration et de la diffusion de l'eau, la modification des caractères hydrophobes ou hydrophiles des sols, la restauration des sols sodiques ou salins, le contrôle de la turbidité de l'eau de cultures inondées, le contrôle du transfert de contaminants, la limitation de la tare terre de certaines culture, sans toutefois se limiter à ces usages.

Le domaine technique dans lequel s'applique le conditionnement de sol est principalement l'agriculture mais concerne aussi la foresterie, la construction et les travaux publics, l'industrie minière, le stockage et le transport de l'eau, la préservation de l'environnement et d'autres domaines.

### ART ANTERIEUR

Déjà durant la seconde guerre mondiale, des polymères, généralement hydrosolubles avaient été utilisés pour stabiliser des sols. La littérature scientifique décrit dès les années 50 l'usage de différents polymères conditionneurs de sols dont le Krilium® de la société Monsanto Chemical Company.

De nombreux autres polymères ont ensuite été décrits pour conditionner les sols :
- les polymères synthétiques : par exemple les polymères et copolymères à base d'acrylamide, d'acide acrylique, d'acrylates, d'acide méthacrylique, de méthacrylates, d'acrylonitrile, de vinylpyrrolidone, de vinylformamide, d'acide itaconique, d'acétate de vinyle, d'acide maléique, d'ethylene glycol et les dérivés de ces polymères, par exemple le polyacrylonitrile hydrolysé, la polyvinyle alcool, etc...
- les polymères naturels, les gommes naturelles, les polysaccharides et leurs dérivés : galactomannane, gomme guar, gomme caroube, gomme xanthane, gomme arabique, chitosan, carraghénane, pectines, amidon, amidons modifiés, alginates, celluloses, dérivés des celluloses (ethers de cellulose), agar-agar, etc...
- les polymères greffés : par exemple les copolymères d'amidon d'acrylamide et d'acrylates, les copolymères d'amidon et d'acrylonitrile, les copolymères de chitosan et d'acide acrylique, etc...Parmi ces polymères, les polyacrylamides de haut poids moléculaire ont été particulièrement étudiés et adoptés pour le conditionnement des sols pour leur efficacité et leur moindre coût. En 1999, les polyacrylamides étaient utilisés sur plus de 400.000 hectares aux Etats-Unis d'Amérique, essentiellement en irrigation gravitaire.

Les polymères à base d'acrylamide incorporés dans l'eau permettent de limiter drastiquement l'érosion. Lentz et al ont appliqué des doses de 1 à 20 ppm de polyacrylamide dans l'eau d'irrigation (irrigation à la raie) et ont obtenu jusqu'à 97% de diminution de l'érosion à la dose de 10 ppm. La littérature est abondante à ce sujet et on peut également citer l'article de Lentz, R. D., Shainberg, I., Sojka, R. E., & Carter, D. L. (1992) : « Preventing irrigation furrow erosion with small applications of polymers » dans le « Soil Science Society of America Journal, 56, 1926-1932 ».

Les polyacrylamides ne permettent pas seulement de limiter l'érosion hydraulique mais aussi l'érosion éolienne. C'est pourquoi ils sont aussi utilisés pour le contrôle de la poussière.

En évitant la redistribution de particules fines de sol sous l'action de l'eau d'irrigation ou de pluie, les polyacrylamides préviennent la formation de croutes de battance qui entraîne l'obturation des pores du sol et forme une croute imperméable à l'eau et à l'air. Les plantules rencontrent des difficultés à traverser cette croûte, limitant l'émergence des cultures. L'émergence des semis peut ainsi être améliorée par l'application de polyacrylamide.

La capacité des polyacrylamides à limiter la percolation de l'eau dans certains sols et à certaines doses est utilisée pour limiter les pertes dans les canaux d'adduction d'eau. L'érosion des sols et la percolation profonde de l'eau sont à l'origine du transfert de différents polluants. L'application de polyacrylamide permet de limiter les transferts d'éléments nutritifs, de produits phytosanitaires et de pathogènes.

Le pouvoir de floculation des polyacrylamides permet aussi de réduire la turbidité de l'eau des cultures inondées.

Les polyacrylamides permettent donc d'apporter une multitude de bénéfices liés au conditionnement de sol, et ce dans de nombreux domaines. Mais leur application sur le sol est limitée à des périodes d'irrigation et est souvent problématique.

En effet, l'application des polymères hydrosolubles tels que les polyacrylamides se fait essentiellement à travers l'eau de systèmes d'irrigation : irrigation gravitaire, irrigation mécanique, irrigation goutte à goutte. Les polymères généralement sous forme de poudre sont alors dissous et dilués à hauteur de quelques ppm à quelques dizaines de ppm dans l'eau d'irrigation.

Le vecteur de transport est l'eau mais elle doit être utilisée en grande quantité ce qui limite l'application de polymère aux seules périodes d'irrigation. Les méthodes d'ensemencement hydraulique sont parfois utilisées pour appliquer du polyacrylamide sur un sol. Le polyacrylamide est dilué dans une grande quantité d'eau apportée au sol. Or il s'agit d'une irrigation par définition limitée aux terres agricoles et parfois non souhaitable.

La demanderesse, dans le brevet FR 2,798,818, propose d'utiliser les polyacrylamides pour limiter la tare terre des plantes à tubercule. Toutefois, il n'existe pas de méthode simple pour appliquer les polymères autres qu'un système d'irrigation. Dès lors, dans l'hypothèse où l'utilisateur ne disposerait pas d'un système d'irrigation ou ne souhaiterait pas l'utiliser pour limiter la teneur d'eau dans les sols avant les travaux d'arrachage, l'application de polyacrylamide devient problématique.

En d'autres termes, le conditionnement de sol doit pouvoir se faire indépendamment de l'irrigation.

Le document FR-A-2370430 décrit un procédé de conditionnement de sol consistant à appliquer sur le sol une solution diluée de polymère (entre 0.05 et 1% de solide) nécessitant donc une quantité d'eau importante.

Or, beaucoup des sols à conditionner ne sont pas des terres agricoles et il est inenvisageable de gaspiller d'énormes quantités d'eau pour appliquer sur le sol un polymère conditionneur.

Alternativement, il a été envisagé d'épandre une poudre directement sur le sol à traiter. La faible densité (environ 0,8) des polyacrylamides ou d'autres polymères en poudre rend le produit sensible au vent. Appliquer une quantité limitée d'une poudre par unité de surface (moins de 250 kg / ha par exemple) rend l'application peu uniforme. De plus, le polymère n'est pas en contact intime avec les particules de sol et devra être « activé » par l'eau de pluie ou d'irrigation, avant d'être effectif. Une fois dissous par l'eau de pluie ou d'irrigation, le polymère ne pourra toutefois pas diffuser de façon satisfaisante, eu égard à sa faible mobilité dans le sol.

D'autres méthodes requièrent l'usage d'autres vecteurs.

Dans la publication de Yu et al « Infiltration and erosion in soils treated with dry PAM and gypsum" - Soil Science Society of America Journal, 67(2), 630-636 (2003), les auteurs proposent de résoudre le problème de la quantité d'eau, en utilisant une charge ou un « filler » : le gypse. Plus précisément ils mélangent du polyacrylamide en poudre avec du gypse de carrière. Le mélange est épandu sur le sol et l'association améliore les performances du gypse. Toutefois, elle diminue les performances du polyacrylamide pour diminuer l'érosion et implique la mise en œuvre d'un amendement, ce qui empêche l'application de cette méthode dans des situations ou cet amendement ne serait pas souhaité.

Dans le brevet US 7,503,143 de la société ENCAP LLC, il est proposé de fixer le polyacrylamide sur un vecteur solide, par exemple un mulch à base de papier. Le produit est ensuite épandu sur le sol. Toutefois, cette méthode entraîne un surcoût de fabrication, de stockage et de transport. La couverture du sol reste pauvre, le produit une fois épandu se trouvant sous la forme de granulés répartis de façon aléatoire sur le sol. Aussi, une fois le produit commercial épandu, le polyacrylamide n'est pas en contact direct avec le sol mais est encore fixé à son vecteur. Cette solution n'est pas satisfaisante.

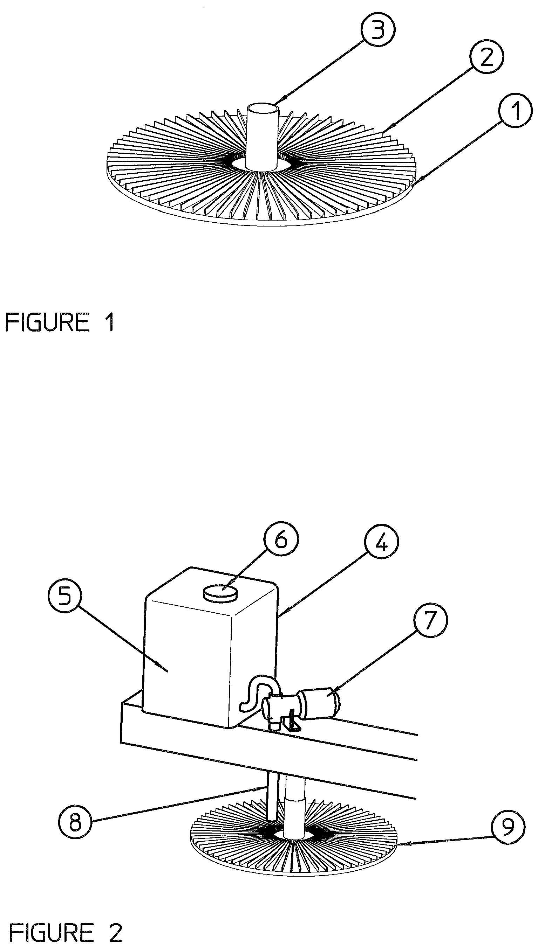

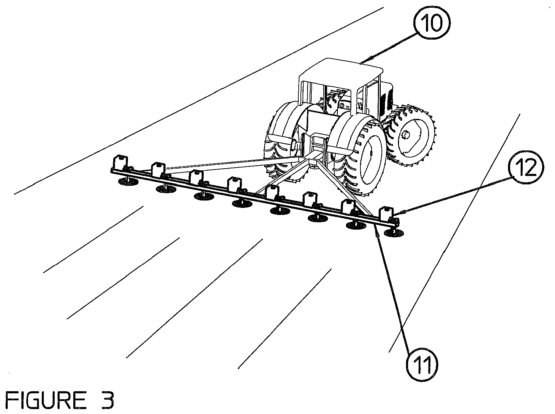

Le document US2011/0309170 décrit un appareil pour pulvériser soit des solides (Fig 1- 3), soit des liquides agrochimiques (figure 4). L'appareil utilise un rotor qui tourne autour de son axe et qui a la forme d'un disque muni de stries (figure 3). Cependant dans ce dernier cas, le dispositif ne comporte pas de disque en rotation pour pulvériser des compositions liquides. Ce document ne décrit pas une méthode de conditionnement de sol mettant en jeu un disque en rotation et une composition liquide comprenant entre plus de 15% et 75% en poids de polymère sous forme de dispersion ou 20 à 75% en poids de polymère sous forme d'émulsion.

Le document US 2 888 206 décrit un support rotatif pour la pulvérisation de liquides, notamment des compositions herbicides.

### PROBLEME TECHNIQUE A RESOUDRE

Aucune des solutions de l'art antérieur ne propose une méthode satisfaisante pour appliquer sur un sol des polymères conditionneurs de sol comme par exemple les polymères à base d'acrylamide.

Dès lors, la solution actuelle reste le recours à l'irrigation. Plus précisément, l'eau d'irrigation reste aujourd'hui le vecteur essentiel pour appliquer des polymères conditionneurs de sols.

Il existe donc un besoin d'une nouvelle méthode pour conditionner les sols avec des polymères hydrosolubles sans avoir recours à un système d'irrigation.

### DESCRIPTION DE L'INVENTION

La présente invention se propose de palier aux problèmes ci-dessus mentionnés.

La présente invention propose une nouvelle méthode de conditionnement de sol consistant à mettre en œuvre un matériel spécifique permettant d'appliquer sur le sol des polymères hydrosolubles ou hydrogonflants à forte concentration sans être contraint par la rhéologie du polymère au moment de la pulvérisation.

Plus précisément, l'invention a pour objet une méthode de conditionnement de sol consistant à appliquer sur le sol un polymère hydrosoluble ou hydrogonflant.

La méthode se caractérise en ce que :
- on prépare le polymère sous la forme d'un liquide concentré en polymère,
- on applique la préparation ainsi obtenue sur la surface d'un support en rotation autour de son axe de révolution de manière à créer des gouttelettes venant s'épandre sur le sol.

En pratique, les gouttelettes formées ont une taille comprise entre 0,1 et 1000 µm en fonction de différents paramètres comme par exemple la rhéologie du liquide, la vitesse de rotation du support, la géométrie du support, ou le relief du support.

Selon l'invention, le liquide concentré en polymère mis en oeuvre comprend au moins de l'eau et/ou de l'huile et/ou un solvant et un polymère conditionneur de sols dont la concentration représente entre plus de 15 et 75% en masse de la préparation (plus de 15000 à 75000 ppm) lorsqu'il se présente sous la forme d'une dispersion et entre 20 et 75% lorsqu'il se présente sous la forme d'une émulsion. Elle peut être sous la forme d'une dispersion aqueuse, d'une émulsion, généralement une émulsion inverse.

Généralement, le liquide concentré en polymère s'écoule verticalement sur la surface du disque.

Cette méthode permet d'appliquer uniformément sur le sol le polymère hydrosoluble sous forme de microgouttelettes, et ce, sans nécessiter de grande quantité de vecteur eau, et donc en l'absence d'un système d'irrigation conventionnel.

Par « système d'irrigation », on désigne une méthode selon laquelle de l'eau est apportée artificiellement à un végétal, un sol ou un substrat de culture, afin de participer à la couverture des besoins en eau du végétal ou de modifier les propriétés physico-chimiques du sol ou du substrat. L'eau est apportée à raison d'au moins 5000 litres d'eau par 10⁴ m² (hectare) et par traitement.

Par « traitement », on désigne par exemple le tour complet d'un pivot qui dure quelques heures, voire 2 ou 3 jours et qui permet d'apporter au sol une quantité d'eau comprise entre 100.000 litres et 500.000 litres par 10⁴ m² (hectare). Dans le cas d'un sprinkler sur enrouleur, un traitement consiste en l'enroulage du système qui prend quelques heures et permet d'appliquer environ la même quantité d'eau par 10⁴ m² (hectare).

On peut citer par exemple l'irrigation par inondation, l'irrigation à la raie, l'irrigation par aspersion mobile (enrouleur, pivot, rampe...), l'irrigation par aspersion fixe, l'irrigation goutte à goutte, l'irrigation par tuyaux poreux mais sans se limiter à ces seules méthodes. Eventuellement, l'eau d'irrigation peut servir de vecteurs à d'autres produits comme par exemple des engrais, des produits phytosanitaires, des conditionneurs de sols.

C'est la combinaison particulière d'une forme concentrée de polymère et d'un matériel spécifique d'application qui permet de résoudre le problème technique de l'invention.

La quantité de polymère hydrosoluble ou hydrogonflant appliquée sur le sol pour obtenir un effet conditionneur du sol est comprise entre 0.1 et 500 kg de polymère par 10⁴ m² (hectare). De manière préférentielle, cette quantité est comprise entre 1 et 100 kg de polymère par 10⁴ m² (hectare), et plus préférentiellement entre 1 et 50 kg par 10⁴ m² (hectare).

Dans la méthode selon l'invention, la quantité d'eau appliquée sur le sol est inférieure à 5000 litres par 10⁴ m² (hectare), préférentiellement inférieure à 2000 litres/10⁴ m² (hectare), très préférentiellement inférieure à 1000 litres/10⁴ m² (hectare).

### Le dispositif d'épandage

Selon l'invention, le liquide concentré en polymère est appliqué au moyen d'un support en rotation de sorte à créer des gouttelettes venant s'épandre sur le sol.

Le dispositif d'épandage comprend ainsi ledit support en rotation.

En pratique, le support se présente sous la forme d'un disque ou d'un cône, de préférence motorisé. Avantageusement, le support est muni sur sa surface de stries ou de rainures, qui de préférence, relient le centre du support à sa périphérie.

Il peut également s'agir d'un disque ou d'un cône muni de bords relevés. L'angle du cône est variable mais généralement compris entre 1 et 45°.

Dans un mode de réalisation avantageux, on applique le liquide concentré en polymère dans la partie centrale du support, c'est-à-dire à proximité de son axe de rotation, en particulier du disque ou du cône pour une meilleure pulvérisation. Plus précisément, le support est muni d'un axe rotatif à la périphérie duquel le liquide est déposé. Le liquide va être divisé en une multitude de gouttelettes qui vont être pulvérisées grâce à la force centrifuge.

Le support peut être en forme de cône, préférentiellement strié, à la base duquel se trouve une zone plate qui recevra le liquide à pulvériser, et au centre duquel se trouve l'axe permettant la rotation du disque. L'angle du cône est variable mais généralement compris entre 1 et 45°.

Le support est généralement en matière plastique. Il peut aussi être en inox ou autres matériaux.

Généralement, le support est disposé à l'horizontale mais il peut également être incliné, jusqu'à la verticale avec dans ce cas, un capot sur la partie supérieure et éventuellement un système de recyclage permettant de récupérer le liquide.

La vitesse de rotation du support en rotation est généralement supérieure à 100 tours par minute, préférentiellement supérieure à 500 tours par minute, permettant la formation de gouttelettes plus petites et une meilleure pulvérisation.

Comme support utilisable dans le procédé de l'invention, on peut citer particulièrement les pulvérisateurs ou atomiseurs rotatifs ou centrifuges à « Ultra Bas Volume » (ULV pour Ultra Low Volume).

Les sociétés Micron Sprayer, Mantis ULV-Sprühgeräte GmbH et Berthoud... commercialisent ce type d'appareil. Ils sont donc facilement disponibles, peu onéreux, et facile à utiliser.

Dans un mode particulier, la méthode comprend en outre :
- le stockage du liquide concentré en polymère dans un réservoir ;
- le transport du liquide concentré en polymère depuis le réservoir vers le support par un moyen d'amenée.

Le réservoir est généralement en plastique, solide ou souple comme par exemple un « bag in box ». Le récipient ou contenant a généralement un volume compris entre 1 litre et 100 litres mais cela n'est pas limitatif. Pour des raisons pratiques, le contenant plastique est préférentiellement à usage unique et donc recyclable ce qui permet de faciliter son utilisation et son nettoyage.

Pour permettre de faciliter le passage du produit, le réservoir peut disposer d'une prise d'air pour éviter sa mise en dépression au-fur-et-à mesure de l'écoulement du produit. Dans le cas où le réservoir est une poche souple (bag in box), les pressions extérieures et intérieures sont égalisées.

Dans un mode de réalisation particulier de l'invention, les prises d'air de l'ensemble des réservoirs sont reliées à un suppresseur ou à une réserve d'air comprimé munie d'un détendeur. De la sorte, le produit dans chacun des réservoirs est soumis à une pression positive constante, facilitant l'obtention du débit souhaité à travers le moyen d'amener le liquide vers le pulvérisateur rotatif.

Le moyen d'amenée du liquide concentré en polymère sur le support est généralement un tuyau souple ou une canule de dosage, autrement appelé ajuteur, et dont le diamètre ou la forme sont modifiés selon le comportement du produit à épandre et le débit souhaité.

Le moyen d'amenée du liquide concentré en polymère peut avantageusement comprendre une pompe doseuse comme par exemple une pompe péristaltique.

Le dosage du produit et le nettoyage des équipements est facilité en mettant en œuvre un moyen d'amenée adapté et optimisé.

Le dispositif d'épandage comprend généralement un réservoir, un moyen d'amenée et un support en rotation. Dans un mode plus particulier, le dispositif comprend un ou plusieurs support(s) rotatif(s), chaque support disposant de son propre réservoir, directement relié à celui-ci par un ajuteur. Chaque réservoir dispose alors au moins d'un orifice permettant la mise à l'air libre, et préférentiellement d'un système de pressurisation permettant de favoriser l'écoulement du liquide concentré en polymère à travers l'ajuteur.

Dans un autre mode plus particulier de réalisation, un réservoir est relié à un support rotatif par un tuyau souple et une pompe doseuse péristaltique.

Dans un autre mode plus particulier de réalisation, plusieurs réservoirs sont reliés à un même réservoir par des tuyaux souples. Une pompe doseuse péristaltique peut être positionnée entre le réservoir et la dérivation du tuyau en autant de tuyaux alimentant chacun un support rotatif. Une pompe doseuse péristaltique peut être positionnée sur chaque tuyau alimentant chaque support, plus précisément entre la dérivation et chaque support, et à raison d'une pompe par support.

Idéalement, le produit à épandre est fourni dans un contenant prêt à l'emploi, à usage unique. Idéalement, les ajuteurs et les tuyaux souples permettant d'amener le produit sont à usage unique.

La méthode peut comprendre en outre la filtration du liquide concentré en polymère.

Cette étape de filtration permet d'éviter l'obturation des conduits les plus fins du matériel, comme par exemple la canule de dosage. La filtration se fait soit entre l'étape de préparation du liquide concentré en polymère et l'étape de stockage, soit entre l'étape de stockage et d'application.

Le(s) support(s), le(s) réservoir(s), le(s) moyen(s) d'amenée peuvent être montés sur une rampe portée ou tractée par un engin à moteur, tel qu'un tracteur permettant de couvrir des surfaces importantes dans un temps raisonnable.

Le dispositif d'épandage peut être également transportable par l'homme pour des conditionnements de plus petites surfaces par exemple. Dans ce cas, le contenant aura une capacité adaptée, par exemple de 10 litres maximum. Le support sera monté sur un manche permettant ainsi une application précise au sol.

Le nettoyage du dispositif d'épandage est essentiel pour l'industrialisation de la méthode. Pour faciliter le nettoyage des éléments de pulvérisation en fin de traitement, une fois le réservoir de produit à pulvériser vidé, il est possible d'incorporer une solution concentrée de sulfate d'ammonium ou d'autres sels compatibles avec le matériel de pulvérisation et avec le milieu dans lequel il sera appliqué (parcelle agricole, milieu naturel...). Cette solution est ensuite pulvérisée pour débarrasser l'équipement des restes d'émulsion eau dans eau de polyacrylamide. Dans le cas d'émulsion inverse, il est possible d'utiliser une huile de préférence végétale. Le nettoyage à l'eau de l'équipement est ainsi facilité.

La dérive du brouillard de gouttelettes pourra être limitée en utilisant des jupes de protection Dans le cas d'une culture déjà en place, il est intéressant de disposer les disques rotatifs entre les lignes de culture, proches du sol et équipées de jupes de protection afin que le polymère soit appliqué directement au sol et non pas sur la canopée.

Le dispositif d'épandage peut être associé à un outil de travail du sol, à dents, griffes, disques ou autre, animé ou non, permettant la pulvérisation de polymères sur le volume de sol travaillé. Le dispositif d'épandage peut-être mis en œuvre avant ou concomitamment à l'enfouissement de tuyaux d'irrigation goutte à goutte, ou être associé à un dispositif d'enfouissement de ces tuyaux.

Une fois le polymère appliqué il est possible de travailler le sol, par exemple pour incorporer la fraction de sol traitée en surface dans l'épaisseur de la couche arable.

Le dispositif d'épandage peut-être associé à un semoir pour limiter les risques d'apparition d'une croute de battance après un semis.

Le dispositif d'épandage pourra être adapté par l'homme de l'art selon le type de conditionnement de sol. Il pourra par exemple faire varier le diamètre du support, son relief, le diamètre de la canule de dosage, le type de pompe.

### Le liquide concentré en polymère et les polymères conditionneurs de sol

Le liquide concentré en polymère contient au moins un polymère conditionneur de sols et au moins de l'eau et/ou de l'huile et/ou un solvant.

Le liquide concentré en polymère comprend généralement au moins de l'eau et/ou de l'huile et/ou un solvant et un polymère conditionneur de sols dont la concentration en masse est comprise entre plus de 15% et 75% lorsqu'il se présente sous la forme d'une dispersion et entre 20 et 75% lorsqu'il se présente sous la forme d'une émulsion. Elle peut être sous la forme d'une dispersion aqueuse, d'une émulsion généralement une émulsion inverse.

Les polymères mis en œuvre dans la présente invention sont des polymères hydrosolubles ou hydrogonflants.

Par « polymère hydrosoluble », on désigne un polymère qui, mis en solution à l'aide d'une agitation dans de l'eau à une température de 25°C à une concentration de 50g/l, donne une solution exempte de particules insolubles.

Par « polymère hydro-gonflant », on désigne un polymère qui, mis en solution dans de l'eau à une température de 25°C, gonfle et épaissit la solution.

Dans un mode préféré de l'invention les polymères mis en œuvre sont des polymères hydrosolubles.

Les dispersions aqueuses de polymère sont une forme liquide obtenue de manière connue par polymérisation dans une solution aqueuse d'un mélange de monomères en présence d'un sel et/ou d'un polymère appelé stabilisant. Elles sont aussi appelées dispersion eau dans eau.

La technique de polymérisation conduisant à des dispersions aqueuses de polymères hydrophiles a été développée depuis de nombreuses années. Un premier type de dispersion anionique a été décrit par Dow Chemical dans les brevets US 3,658,772 et US 3,493,500. Les dispersions sont obtenues par copolymérisation d'acide acrylique et d'un autre monomère dans une solution aqueuse renfermant des sels inorganiques.

D'autres brevets détaillent cette technologie d'obtention des dispersions de polymères. On citera :
- le brevet Hymo JP 62-20502. Il constitue l'un des tous premiers brevets ayant donné lieu à un développement industriel. Dans ce procédé, une dispersion aqueuse est obtenue par polymérisation d'un mélange de monomères hydrosolubles dans une solution saline aqueuse en présence d'un dispersant,
- le brevet US 5,605,970 qui reprend le procédé Hymo en incorporant à la dispersion un monomère hydrophobe,
- le brevet US 5,837,776 qui fait une synthèse des enseignements de Dow et de Hymo,
- ainsi que le brevet WO 99/29745 très proche du brevet Hymo.

Cette technique consiste à effectuer la polymérisation d'un monomère ou d'un mélange de monomères dans de l'eau contenant un sel et/ou d'autres agents chimiques comme des dispersants en solution ou en dispersion. Le polymère hydrophile formé durant la polymérisation n'étant pas soluble dans le milieu salin et/ou contenant des dispersants, il précipite lorsqu'il atteint un poids moléculaire suffisamment élevé. A la fin de la polymérisation, on obtient une dispersion liquide de particules de polymère en suspension dans le mélange aqueux.

Généralement, les dispersions de polymères contiennent entre 17% et 35% en masse de polymère conditionneur.

Les émulsions inverses sont également une forme liquide bien connue des polymères et sont obtenues par la technique de polymérisation en émulsion inverse. Cette technique comprend les étapes suivantes :
a) Disposer d'une solution aqueuse du ou des monomères sélectionnés, dite « phase aqueuse »,
b) Emulsionner ladite solution aqueuse dans une phase non miscible à l'eau, dite «phase huile »,
c) Mener la réaction de polymérisation grâce à des initiateurs de polymérisation.

On peut citer le brevet US 4,539,368 qui détaille cette méthode de polymérisation.

Généralement les émulsions de polymères contiennent entre 20 et 75% en masse de polymère conditionneur, préférentiellement entre 20 et 55% en masse.

Le liquide concentré en polymère mis en oeuvre selon l'invention peut contenir plusieurs polymères conditionneurs de sols, et également d'autres ingrédients comme par exemple des produits phytosanitaires, des herbicides, des pesticides, des fongicides, des éléments nutritifs, des engrais.

Dans un mode de réalisation préféré de l'invention, le liquide concentré en polymère utilisé dans la méthode selon l'invention est une dispersion aqueuse.

La mise en œuvre de la méthode selon l'invention permet d'appliquer de nombreux polymères décrits pour conditionner les sols comme :
- les polymères synthétiques : par exemple les polymères et copolymères à base d'acrylamide, d'acide acrylique, d'acrylates, d'acide méthacrylique, de méthacrylates, d'acrylonitrile, de vinylpyrrolidone, de vinylformamide, d'acide itaconique, d'acétate de vinyle, d'acide maléique, d'ethylene glycol et les dérivés de ces polymères, par exemple le polyacrylonitrile hydrolysé, la polyvinyle alcool, etc...
- les polymères naturels, les gommes naturelles, les polysaccharides et leurs dérivés : galactomannane, gomme guar, gomme caroube, gomme xanthane, gomme arabique, chitosan, carraghénane, pectines, amidon, amidons modifiés, alginates, celluloses, dérivés des celluloses (ethers de cellulose), agar-agar, etc...
- les polymères greffés : par exemple les copolymères d'amidon d'acrylamide et d'acrylates, les copolymères d'amidon et d'acrylonitrile, les copolymères de chitosan et d'acide acrylique, etc...

Il existe un intérêt particulier à utiliser la méthode de l'invention pour les polymères à base d'acrylamide et particulièrement ceux de haut poids moléculaires car ils sont plus efficaces comme conditionneurs de sol que les polymères de moindre poids moléculaire.

Dans un mode préféré de l'invention les polymères mis en œuvre sont des polymères à base d'acrylamide ayant une masse moléculaire moyenne en poids supérieure à 250.000 g/mol et de préférence comprise entre 1 million de g/mol et 30 millions, et plus préférentiellement supérieure à 5 millions.

Les polymères à base d'acrylamide sont obtenus par polymérisation de monomères hydrosolubles ayant une double liaison éthylénique choisis parmi les familles suivantes :
- les monomères anioniques. Ils sont avantageusement choisis dans le groupe comprenant les monomères possédant une fonction carboxylique (ex: acide acrylique, acide methacrylique, et leurs sels...), les monomères possédant une fonction acide sulfonique (ex: acide 2-acrylamido- 2-méthylpropane sulfonique (AMPS) et leurs sels...).
- les monomères non ioniques. Ils sont avantageusement choisis dans le groupe comprenant l'acrylamide et le méthacrylamide, les dérivés de l'acrylamide comme les N-alkylacrylamide par exemple le N-isopropylacrylamide, le N-tert- butylacrylamide, ainsi que les N,N-dialkylacrylamides comme le NN-diméthylacrylamide et le N-méthylolacrylamide. Egalement peuvent être utilisés la vinylformamide, la N-vinylpyridine, la N- vinylpyrrolidone, les hydroxyalkyl acrylates et méthacrylates, les (méth) acrylates portant des chaînes du type alkoxy. Les monomères non ioniques préférés sont l'acrylamide, NN-diméthylacrylamide, la N- vinylpyrrolidone.
- les monomères cationiques. Ils sont de préférence choisis dans le groupe comprenant les sels de diallyldialkyl ammonium comme le chlorure de diallyl dimethyl ammonium (DADMAC) et encore les acrylates et methacrylates de dialkylaminoalkyle, en particulier l'acrylate de dialkylaminoéthyle (ADAME) et le méthacrylate de dialkylaminoéthyle (MADAME), ainsi que leurs formes acidifiés ou quaternisés par les moyens connus de l'homme de métier, et encore les dialkyl-aminoalkylacrylamides ou -methacrylamides, ainsi que leurs formes acidifiés ou quaternisés de manière connue, par exemple le (meth)acrylamido-propyl triméthyl ammonium chlorure.
- les monomères de type zwitterioniques peuvent également être utilisés; ils associent à la fois les charges anioniques et cationiques sur un seul et même momomère. A titre d'exemples de monomères zwitterioniques, on peut mentionner : les monomères sulfobétaïnes comme le sulfopropyl diméthylammonium éthyl méthacrylate, le sulfopropyl diméthylammonium propylméthacrylamide, le sulfopropyl 2-vinylpyridinium, les monomères phosphobétaïnes, comme le phosphato éthyl triméthylammonium éthyl méthacrylate les monomères carboxybétaïnes.

Sans sortir du cadre de l'invention, en association avec ces monomères, d'autres monomères peuvent également être utilisés, notamment des monomères hydrophobes ou hydrophiles à caractère hydrophobe. On citera à titre d'exemple le styrène, les alkyl (meth)acrylates, les aryles (meth) acrylates, les dérivés hydrophobes d'acrylamide.

Les polymères mis en oeuvre dans le cadre de l'invention peuvent être linéaires, structurés ou réticulés. Par polymère structurés, on entend les polymères branchés, en forme d'étoile (star) ou en forme de peigne (comb). Ces polymères branchés sont, de manière classique, des polymères non linéaires qui possèdent des chaînes latérales. Par polymère réticulé, on entend, de manière classique, un polymère non linéaire qui se présente sous la forme d'un réseau tridimensionnel insoluble dans l'eau, mais gonflable dans l'eau.

Préférentiellement les polymères sont linéaires ou branchés. Préférentiellement les polymères sont hydrosolubles.

Grâce à la méthode selon l'invention, il est possible d'appliquer de façon simple et économique sur un sol à conditionner, des polymères à forte concentration, sans avoir recours à un système d'irrigation.

Les formes dispersions, émulsions des polymères utilisées dans cette méthode présentent une large fourchette de concentration comprise entre plus de 15 et 75 % en poids (dispersion) et 20 à 75% en poids (émulsion), ce qui, associé à un matériel d'application spécifique permet d'appliquer des quantités relativement faibles de polymère conditionnant de manière uniforme sur des grandes surfaces, sans nécessité l'apport de grande quantité d'eau. Ces opérations de conditionnement de sol peuvent donc être effectuées indépendamment des phases d'irrigation.

La méthode selon l'invention permet donc d'économiser de grande quantité d'eau, en évitant la mise en œuvre d'un système d'irrigation.

Elle permet également de conditionner des terres non agricoles nécessitant un conditionnement sur lesquelles une irrigation est inenvisageable.

Enfin la méthode selon l'invention permet une meilleure couverture, plus homogène et efficace, de la surface du sol car elle utilise l'eau comme vecteur. Le polymère est alors disponible beaucoup plus facilement et rapidement pour jouer son rôle de conditionneur contrairement à l'application de polymères en poudre en association ou non avec une charge.

L'invention et les avantages qui en découlent ressortiront bien des exemples ci-après, à l'appui des figures annexées.
La figure 1 est une représentation schématique d'un support selon l'invention.
La figure 2 est une représentation schématique d'un matériel d'application comprenant le support de la figure 1.
La figure 3 est une représentation schématique d'un tracteur équipé du matériel d'application.

### Exemples 1 : équipement pour la mise en œuvre de la méthode

La figure 1 est une représentation du support susceptible d'être mis en œuvre dans la méthode de l'invention. Le support se présente sous la forme d'un disque rotatif (1), munis de stries allant du centre vers l'extérieur (2) et d'un axe (3). Au contact du disque en rotation, le liquide se transforme en gouttelettes de taille variable en fonction de la vitesse de rotation et de la rhéologie du liquide concentré en polymère.

Sur la figure 2, on a représenté le reste du matériel nécessaire à la mise en œuvre de la méthode. Le matériel comprend un récipient (4) remplis d'une dispersion de polyacrylamide (5), et munis d'un dispositif de prise d'air (6). Il comprend en outre une pompe péristaltique (7) et un tuyau (8) reliant le réservoir au support (9).

Sur la figure 3, on a représenté un tracteur (10) embarquant une rampe (11) munis de 8 matériels d'application (12) et permettant de conditionner des surfaces importantes dans un temps raisonnable.

### Exemple 2 : exemple de mise en œuvre de la méthode

Nous avons tenté d'épandre sur une surface de près de 1 hectare, 10 kg de polyacrylamide à l'aide d'un pulvérisateur agricole classique. Nous avons ensuite appliqué les mêmes quantités de polymère selon la méthode de l'invention. La surface à traiter était délimitée au sein d'une plus grande parcelle sous la forme d'un rectangle de 72 mètres de largeur sur 139 mètres de longueur, adaptée aux dimensions des engins de pulvérisation, soit 24 mètres de largeur pour le pulvérisateur classique et 12 mètres pour l'équipement assemblé selon la méthode de l'invention.

Dans le premier cas, nous avons dilué dans la cuve du pulvérisateur agricole une poudre de copolymère d'acrylamide (70% molaire) et d'acrylate de sodium (30% molaire) commercialisé par SNF SAS sous le nom de Flobond A30, à hauteur de 300 ppm, soit une quantité totale de bouillie à pulvériser de 33.333 litres. Le pulvérisateur présentant une capacité d'emport de 3000 litres, nous nous sommes résolus à effectuer 12 applications de 2778 litres de la préparation de copolymère d'acrylamide à 300 ppm. Chaque passage impliquant la préparation de la bouillie à pulvériser, nous avons dû à chaque fois verser doucement la poudre de copolymère d'acrylamide à diluer dans l'eau de la cuve du pulvérisateur sous agitation constante puis attendre un temps de maturation d'environ 1 heure toujours sous agitation constante. Seulement ensuite la bouillie pouvait être pulvérisée. Le débit maximum du pulvérisateur étant limité, nous avons décidé d'effectuer 3 passages successifs à la vitesse de 5 km/h pour pulvériser l'intégralité de la bouillie à l'aide de buses à jets habituellement utilisées pour l'application d'engrais liquides. La pulvérisation de chaque bouillie de 2778 litres aurait dû nécessiter une vingtaine de minutes en prenant en compte les manœuvres. Toutefois les filtres du pulvérisateur ont dû être nettoyés à plusieurs reprises, ceux-ci se colmatant facilement en présence de granules de copolymère d'acrylamide mal dissoutes ou de particules insolubles. Le temps de préparation de chaque bouillie additionné au temps nécessaire pour chacune des 12 applications prévues, nous nous sommes rendu compte que nous ne pourrions pas réaliser l'opération complète en une seule journée de travail pour 1 seul hectare de surface, ce qui nous a contraints à abandonner l'opération en cours de route. De plus, pour les besoins de cette expérience, nous avons était contraints de choisir une parcelle disposant d'un point d'eau pour permettre la préparation des bouillies. Il paraît encore moins envisageable de mettre en œuvre cette méthode sur une parcelle éloignée d'un point d'eau ou dans des zones déficitaires en eau. De plus, apporter 33 333 litres d'eau sur 1 hectare de sol consiste en un apport d'eau non négligeable que nous assimilons à une irrigation. De plus, le nettoyage du pulvérisateur et de sa cuve a nécessité de grandes quantités d'eau en raison de la nature colloïdale du copolymère d'acrylamide. Cette méthode ne peut donc pas raisonnablement être mise en œuvre.

Selon la méthode de l'invention, nous avons assemblé un ensemble de 12 mètres de large équipé de 12 supports rotatifs tel que décrits précédemment, chacun alimenté en produit par un tuyau souple relié à une unique poche souple remplie du produit à épandre elle-même équipée d'un filtre grossier, disposée dans une cuve rigide, chaque tuyau souple étant fiché dans sa propre pompe péristaltique disposée sur la rampe à côté de chaque atomiseur rotatif. En avançant à la vitesse de 7,5 km/h, 40 litres de dispersion aqueuse de copolymère d'acrylamide (70% molaire) et d'acrylate de sodium (30% molaire) commercialisé par SNF SAS sous le nom de SFA 30 (contenant 25% de copolymère) ont pu être appliqués en 10 minutes. Une fois l'opération terminée, la poche souple et les tuyaux souples ont été mis au rebut, et les supports rotatifs ont été démontés puis lavés à grande eau.

## Revendications

1. Méthode de conditionnement de sol consistant à appliquer sur le sol un polymère hydrosoluble ou hydrogonflant, **caractérisée en ce que** :
- on prépare le polymère sous la forme d'un liquide concentré en polymère,
- on applique la préparation ainsi obtenue sur la surface d'un support en rotation autour de son axe de révolution de manière à créer des gouttelettes venant s'épandre sur le sol,
- dans laquelle, le liquide concentré en polymère comprend au moins de l'eau et/ou de l'huile et/ou un solvant et un polymère dont la concentration représente entre plus de 15% et 75% en masse de la préparation lorsqu'il se présente sous la forme d'une dispersion et entre 20 et 75% lorsqu'il se présente sous la forme d'une émulsion.

2. Méthode selon la revendication 1, **caractérisée en ce que** le liquide concentré en polymère se présente sous la forme d'une dispersion aqueuse ou d'une émulsion inverse.

3. Méthode selon l'une des revendications précédentes **caractérisée en ce qu'**on applique sur le sol entre 0.1 et 500 kg de polymère par 10⁴ m² (hectare), préférentiellement entre 1 et 100 kg de polymère par 10⁴ m² (hectare), et plus préférentiellement entre 1 et 50 kg par 10⁴ m² (hectare).

4. Méthode selon l'une des revendications précédentes, **caractérisée en ce qu'**on applique sur le sol moins de 5000 litres d'eau par 10⁴ m² (hectare), préférentiellement moins de 2000 1/10⁴ m² (ha), très préférentiellement moins de 1000 1/10⁴ m² (ha).

5. Méthode selon l'une des revendications précédentes, **caractérisée en ce que** le support se présente sous la forme d'un disque ou d'un cône.

6. Méthode selon l'une des revendications précédentes, **caractérisé en ce que** le support est muni sur sa surface de stries ou de rainures, reliant avantageusement le centre du support à sa périphérie.

7. Méthode selon l'une des revendications précédentes, **caractérisée en ce que** le support se présente sous la forme d'un disque ou d'un cône muni de bords relevés.

8. Méthode selon l'une des revendications précédentes, **caractérisée en ce qu'**on applique le liquide concentré en polymère dans la partie centrale du support à proximité de son axe de rotation.

9. Méthode selon l'une des revendications précédentes, **caractérisée en ce qu'**elle comprend en outre :
- le stockage du liquide concentré en polymère dans un réservoir ;
- le transport du liquide concentré en polymère depuis le réservoir vers le support par un moyen d'amenée

10. Méthode selon la revendication 9 **caractérisée en ce que** le moyen d'amenée est un tuyau souple et comprend avantageusement une pompe doseuse, de préférence une pompe péristaltique.

11. Méthode selon la revendication 9 **caractérisée en ce que** le moyen d'amenée est un ajuteur et le liquide concentré en polymère est contenu dans un réservoir sous pression.

12. Méthode selon l'une des revendications 9 ou 10 **caractérisée en ce que** le support, le réservoir et le moyen d'amenée sont montés sur une rampe portée ou tractée par un engin à moteur tel qu'un tracteur

13. Méthode selon l'une des revendications précédentes **caractérisée en ce que** le polymère hydrosoluble ou hydrogonflant est choisi dans le groupe comprenant :
- les polymères et copolymères à base d'acrylamide, d'acide acrylique, d'acrylates, d'acide méthacrylique, de méthacrylates, d'acrylonitrile, de vinylpyrrolidone, de vinylformamide, d'acide itaconique, d'acétate de vinyle, d'acide maléique, d'ethylene glycol et les dérivés de ces polymères, par exemple le polyacrylonitrile hydrolysé, la polyvinyle alcool ;
- les gommes naturelles, les polysaccharides et leurs dérivés : galactomannane, gomme guar, gomme caroube, gomme xanthane, gomme arabique, chitosan, carraghénane, pectines, amidon, amidons modifiés, alginates, celluloses, dérivés des celluloses (ethers de cellulose), agar-agar ;
- les copolymères d'amidon d'acrylamide et d'acrylates, les copolymères d'amidon et d'acrylonitrile, les copolymères de chitosan et d'acide acrylique.

14. Méthode selon la revendication 1 **caractérisée en ce que** le liquide concentré en polymère se présente sous la forme d'une dispersion de polymère contenant entre 17% et 35% en masse de polymère conditionneur.

15. Méthode selon la revendication 1 **caractérisée en ce que** le liquide concentré en polymère se présente sous la forme d'une émulsion de polymère contenant entre 20 et 55% en masse de polymère conditionneur.

16. Méthode selon l'une des revendications précédentes, **caractérisée en ce que** le polymère hydrosoluble est un polymère à base d'acrylamide ayant une masse moléculaire moyenne en poids supérieure à 250.000 g/mol et de préférence comprise entre 1 million de g/mol et 30 millions, et plus préférentiellement supérieure à 5 millions.

## Patentansprüche

1. Verfahren zur Bodenverbesserung, das darin besteht, ein wasserlösliches oder in Wasser quellbares Polymer auf den Boden anzuwenden, **dadurch gekennzeichnet, dass**:
- das Polymer in Form eine Flüssigkeit mit hohem Polymergehalt zubereitet wird,
- die so erhaltene Zubereitung auf der Oberfläche eines sich um seine Drehachse drehenden Verteilers angewandt wird, so dass sich Tröpfchen bilden, die sich auf dem Boden verteilen,
- in der die Flüssigkeit mit hohem Polymergehalt mindestens Wasser und/ oder Öl und/oder ein Lösungsmittel und ein Polymer enthält, dessen Konzentration zwischen über 15 und 75 Masse-% der Zubereitung, wenn es die Form einer Dispersion hat, und zwischen 20 und 75% der Zubereitung, wenn es die Form einer Emulsion hat, beträgt.

2. Verfahren nach Anspruch 1, **dadurch gekennzeichnet, dass** die Flüssigkeit mit hohem Polymergehalt die Form einer wässrigen Dispersion oder einer inversen Emulsion hat.

3. Verfahren nach einem der vorangehenden Ansprüche, **dadurch gekennzeichnet, dass** auf den Boden zwischen 0,1 und 500 kg Polymer pro 10⁴ m² (Hektar), noch besser zwischen 1 und 100 kg Polymer pro 10⁴ m² (Hektar), und am besten zwischen 1 und 50 kg pro 10⁴ m² (Hektar) angewandt werden.

4. Verfahren nach einem der vorangehenden Ansprüche, **dadurch gekennzeichnet, dass** auf den Boden weniger als 5.000 Liter Wasser pro 10⁴ m² (Hektar), noch besser weniger als 2.000 1/10⁴ m² (ha), und am besten weniger als 1.000 1/10⁴ m (ha) angewandt werden.

5. Verfahren nach einem der vorangehenden Ansprüche, **dadurch gekennzeichnet, dass** der Verteiler die Form einer Scheibe oder eines Kegels hat.

6. Verfahren nach einem der vorangehenden Ansprüche, **dadurch gekennzeichnet, dass** der Verteiler auf seiner Oberfläche Rippen oder Rillen hat, die vorteilhafterweise das Zentrum des Verteilers mit dem Umfang verbinden.

7. Verfahren nach einem der vorangehenden Ansprüche, **dadurch gekennzeichnet, dass** der Verteiler die Form einer Scheibe oder eines Kegels mit hochstehenden Rändern hat.

8. Verfahren nach einem der vorangehenden Ansprüche, **dadurch gekennzeichnet, dass** die Flüssigkeit mit hohem Polymergehalt im zentralen Teil des Verteilers, in Nähe seiner Drehachse, angewandt wird.

9. Verfahren nach einem der vorangehenden Ansprüche, **dadurch gekennzeichnet, dass** es außerdem umfasst:
- die Lagerung der Flüssigkeit mit hohem Polymergehalt in einem Behälter;
- den Transport der Flüssigkeit mit hohem Polymergehalt vom Behälter über eine Zufuhrvorrichtung zum Verteiler.

10. Verfahren nach Anspruch 9, **dadurch gekennzeichnet, dass** es sich bei der Zufuhrvorrichtung um einen Schlauch handelt, die vorteilhafterweise eine Dosierpumpe, am besten eine peristaltische Pumpe, enthält.

11. Verfahren nach Anspruch 9, **dadurch gekennzeichnet, dass** es sich bei der Zufuhrvorrichtung um einen Anpasser handelt und dass die Flüssigkeit mit hohem Polymergehalt in einem unter Druck stehenden Behälter enthalten ist.

12. Verfahren nach einem der Ansprüche 9 oder 10, **dadurch gekennzeichnet, dass** der Verteiler, der Behälter und die Zufuhrvorrichtung auf einer Rampe montiert sind, die von einem Triebfahrzeug wie zum Beispiel einem Traktor transportiert oder gezogen wird.

13. Verfahren nach einem der vorangehenden Ansprüche, **dadurch gekennzeichnet, dass** das wasserlösliche oder in Wasser quellbare Polymer aus der Gruppe mit:
- Polymeren und Copolymeren auf Basis von Acrylamid, Acrylsäure, Acrylaten, Methacrylsäure, Methacrylaten, Acrylnitril, Vinylpyrrolidon, Vinylformamid, Itaconsäure, Vinylacetat, Maleinsäure, Ethylenglykol und den Derivaten dieser Polymere, zum Beispiel hydrolysiertem Polyacrylnitril, Polyvinylalkohol,
- natürlichen Gummis, Polysacchariden und ihren Derivaten: Galactomannan, Guarkernmehl, Johannisbrotkernmehl, Xanthangummi, Gummi arabicum, Chitosan, Carrageen, Pektine, Stärke, modifizierte Stärken, Alginate, Zellulosen, Zellulosederivate (Zelluloseäther), Agar-Agar;
- Stärke-, Acrylamid- und Acrylat-Kopolymeren, Stärke- und Acrylnitril-Kopolymeren sowie Chitosan- und Acrylsäure-Kopolymeren ausgewählt wird.

14. Verfahren nach Anspruch 1, **dadurch gekennzeichnet, dass** die Flüssigkeit mit hohem Polymergehalt die Form einer Polymerdispersion hat, die zwischen 17 % und 35 Masse % des bodenverbessernden Polymers enthält.

15. Verfahren nach Anspruch 1 **dadurch gekennzeichnet, dass** die Flüssigkeit mit hohem Polymergehalt die Form einer wässrigen Polymeremulsion hat, die zwischen 20 % und 55 Masse % des bodenverbessernden Polymers enthält.

16. Verfahren nach einem der vorangehenden Ansprüche, **dadurch gekennzeichnet, dass** das wasserlösliche Polymer ein Polymer auf Acrylamidbasis mit einem durchschnittlichen mittleren Molekulargewicht von über 250.000 g/mol und besser noch zwischen 1 Million g/mol und 30 Millionen und am besten über 5 Millionen hat.

## Claims

1. Method of soil conditioning which consists in applying a water-soluble or water-swelling polymer to the soil, **characterized in that**:
- the polymer is prepared as a polymer-concentrated liquid,
- the preparation obtained in this way is applied to the surface of a support rotating about its axis of revolution in order to form droplets which are spread on the soil,
- wherein the polymer-concentrated liquid includes at least water and/or oil and/or a solvent and a polymer whose concentration represents between more than 15% and 75% of the preparation weight when it is in the form of a dispersion and between 20 and 75 % when it is in the form of an emulsion.

2. Method according to claim 1, **characterized in that** the polymer concentrate is in the form of an aqueous dispersion or an inverse emulsion.

3. Method according to one of the previous claims **characterized in that** between 0.1 and 500 kg of polymer per 10⁴ m² (hectare) is applied to the soil, preferably between 1 and 100 kg of polymer per 10⁴ m² (hectare), and even more preferably between 1 and 50 kg per 10⁴ m² (hectare).

4. Method according to one of the previous claims **characterized in that** less than 5000 liters of water per 10⁴ m² (hectare), preferably less than 2000 liters/10⁴ m² (ha) and even more preferably less than 1000 liters/10⁴ m² (ha) is applied to the soil.

5. Method according to one of the previous claims, **characterized in that** the support is a disc or a cone.

6. Method according to one of the previous claims **characterized in that** the support has striations or grooves on its surface, advantageously connecting the center of the support to its perimeter.

7. Method according to one of the previous claims, **characterized in that** the support is a disc or a cone provided with a raised edges.

8. Method according to one of the previous claims, **characterized in that** a polymer concentrated liquid is applied to the central part of the support near its axis of rotation.

9. Method according to one of the previous claims **characterized in that** it also includes:
- the storage of the concentrated polymer liquid in a tank;
- the transport of the concentrated polymer liquid from the tank to the support by a feeding system.

10. Method according to claim 9 **characterized in that** the supply means is a flexible pipe and advantageously includes a dosing pump, preferably a peristaltic pump.

11. Method according to claim 9 **characterized in that** the supply means is a nozzle and the polymer concentrated liquid is contained in a tank under pressure.

12. Method according to one of claims 9 or 10 **characterized in that** the support, the tank and the supply means are mounted on a pipe carried or towed by a motor-driven machine such as a tractor.

13. Method according to one of the previous claims **characterized in that** the water-soluble or water-swellable polymer is chosen from the group including:
- polymers and copolymers based on acrylamide, acrylic acid, acrylates, methacrylic acid, methacrylates, acrylonitrile, vinylpyrrolidone, vinylformamide, itaconic acid, vinyl acetate, maleic acid, glycol ethylene and the derivatives of these polymers, for instance hydrolyzed polyacrylonitrile, alcohol polyvinyl;
- natural polymers, natural rubbers, polysaccharides and their derivatives: galactomannan, guar gum, carob gum, xanthane gum, arabic gum, chitosan, carrageen, pectines, starch, modified starch, alginates, celluloses, cellulose derivatives (cellulose ethers), agar-agar;
- acrylamide starch and acrylamide copolymers, starch and acrylonitrile copolymers, chitosan and acrylic acid copolymers.

14. A method according to claim 1 **characterized in that** the polymer concentrated liquid is in the form of a dispersion of polymer containing between 17 and 35% by weight of conditioning polymer.

15. Method according to claim 1 **characterized in that** the polymer concentrated liquid is in the form of a polymer emulsion containing between 20 and 55% by weight of conditioning polymer.

16. Method according to one of the previous claims **characterized in that** the water-soluble polymer is a polymer based on acrylamide having an average molecular weight by weight in excess of 250,000 g/mol and preferably comprised between 1 million g/mol and 30 million, and even more preferably in excess of 5 million.
